# EUROPEAN PATENT APPLICATION

(11) **EP 4 597 675 A1**
(43) Date of publication of application: **06.08.2025**
(21) Application number: 23917113.5
(22) Date of filing: 25.10.2023
(51) Int. Cl.: H01M 10/0568, H01M 10/0569, H01M 10/0525

(54) **ELECTROLYTE FOR SODIUM SECONDARY BATTERY, SODIUM SECONDARY BATTERY, AND ELECTRICAL DEVICE**

(30) Priority: 16.01.2023 CN 202310075575
(71) Applicant: Contemporary Amperex Technology (Hong Kong) Limited, Central (HK)
(72) Inventor: LI, Xiaolong, Ningde, Fujian 352100 (CN); ZHANG, Xinxin, Ningde, Fujian 352100 (CN); GUO, Bingkun, Ningde, Fujian 352100 (CN); LIU, Ben, Ningde, Fujian 352100 (CN); YAO, Shikang, Ningde, Fujian 352100 (CN); ZHOU, Qicheng, Ningde, Fujian 352100 (CN); LAN, Jiadian, Ningde, Fujian 352100 (CN)
(74) Representative: Ziebig Hengelhaupt Intellectual Property Attorneys Patentanwaltskanzlei PartGmbB
(86) International application number: PCT/CN2023/126590
(87) International publication number: WO 2024/152645

(57) **Abstract**

This application provides a sodium secondary battery electrolyte, a sodium secondary battery, and an electrical device. The sodium secondary battery electrolyte includes a solvent. A percentage of an amount of substance of a free solvent in relation to a total amount of substance of the solvent in the electrolyte is not greater than 50%. The electrolyte can improve the high-temperature cycle performance of the battery, reduce the high-temperature gassing amount of the battery, and improve the electrochemical performance and safety performance of the battery at high temperature.

## Description

### CROSS-REFERENCE TO RELATED APPLICATIONS

This application claims priority to Chinese Patent Application No. 202310075575.9, filed on January 16, 2023 and entitled "SODIUM SECONDARY BATTERY ELECTROLYTE, SODIUM SECONDARY BATTERY, AND ELECTRICAL DEVICE", which is incorporated herein by reference in its entirety.

### TECHNICAL FIELD

This application relates to the technical field of secondary batteries, and in particular, to a sodium secondary battery electrolyte, a sodium secondary battery, and an electrical device.

### BACKGROUND

With the development of battery technology, lithium secondary batteries dominate the portable electronics market and gradually scale out to the large-scale energy storage field. However, the existing lithium resources are no longer enough to meet the urgent need to build large-scale energy storage systems of a high energy density. Therefore, sodium secondary batteries characterized by abundant sodium reserves, cost-effectiveness, and similar electrochemical properties to lithium secondary batteries have emerged. However, the sodium secondary batteries that are currently being widely studied incur low cycle performance and severe gassing of the batteries at high temperature, thereby bottlenecking further application of sodium secondary batteries drastically.

### SUMMARY

In view of the problems in the background technology, this application provides a sodium secondary battery electrolyte to improve the high-temperature cycle performance of the sodium secondary battery, reduce gassing of the sodium secondary battery at high temperature, and improve the electrochemical performance and safety performance of the sodium secondary battery at high temperature.

According to a first aspect, this application provides a sodium secondary battery electrolyte. The electrolyte includes a solvent. A percentage of an amount of substance of a free solvent in relation to a total amount of substance of the solvent in the electrolyte is not greater than 50%.

By controlling the percentage of the amount of substance of the free solvent in relation to the total amount of substance of the solvent in the electrolyte to be not greater than 50%, this application reduces the proportion of free solvent molecules in the electrolyte, reduces side reactions between the free solvent molecule and the positive or negative electrode, improves the cycle performance of the battery at high temperature, suppresses gassing of the sodium secondary battery cycled at high temperature, and improves the electrochemical performance and safety performance of the battery at high temperature.

In any embodiment, the electrolyte includes a sodium salt. A molar concentration of the sodium salt in the electrolyte is 2 to 7 mol/L, and optionally 3 to 7 mol/L.

By controlling the molar concentration of the sodium salt to fall within the appropriate range, this application can increase the proportion of the solvent molecules coordinated with sodium ions in the electrolyte, and reduce the proportion of free solvent molecules in the electrolyte, so that the battery achieves excellent normal-temperature cycle performance and high-temperature cycle performance and just a small amount of gas generated at high temperature.

In any embodiment, the sodium salt includes a first sodium salt. A solubility of the first sodium salt in the solvent at room temperature is greater than 4 mol/L.

The first sodium salt of an excellent solubility ensures an appropriate molar concentration of the sodium salt in the electrolyte, makes the battery excellent in normal-temperature cycle performance and high-temperature cycle performance, and contributes to a low level of high-temperature gassing.

In any embodiment, the first sodium salt includes one or more of sodium bis(fluorosulfonyl)imide, sodium bis(trifluoromethanesulfonyl)imide, or sodium (fluorosulfonyl)(trifluoromethanesulfonyl)imide, and optionally one or two of sodium bis(fluorosulfonyl)imide or sodium bis(trifluoromethanesulfonyl)imide.

In any embodiment, a molar concentration of the first sodium salt in the electrolyte is not less than 0.01 mol/L.

The appropriate molar concentration of the first sodium salt in the electrolyte makes the battery excellent in normal-temperature cycle performance and high-temperature cycle performance, and contributes to a low level of high-temperature gassing.

In any embodiment, the sodium salt includes a second sodium salt. A solubility of the second sodium salt in the solvent at room temperature is less than 3 mol/L.

In any embodiment, the second sodium salt includes one or more of sodium hexafluorophosphate, sodium tetrafluoroborate, sodium hexafluoroarsenate, sodium trifluoroacetate, sodium difluoro(oxalato)borate, sodium bis(oxalato)borate, or sodium trifluoromethanesulfonate.

In any embodiment, a molar concentration of the second sodium salt in the electrolyte is less than 2.7 mol/L, and optionally is 0.2 to 2.7 mol/L.

The appropriate molar concentration of the second sodium salt in the electrolyte makes the battery excellent in normal-temperature cycle performance and high-temperature cycle performance, and contributes to a low level of high-temperature gassing.

In any embodiment, the electrolyte includes a lithium salt.

The lithium salt included in the electrolyte can improve the normal-temperature cycle performance and high-temperature cycle performance of the battery, reduce the high-temperature gassing phenomena of the battery, and improve the electrochemical performance and safety performance of the battery.

In any embodiment, the lithium salt includes one or more of lithium hexafluorophosphate, lithium tetrafluoroborate, lithium perchlorate, lithium hexafluoroarsenate, lithium trifluoroacetate, lithium tetraphenylborate, lithium trifluoromethanesulfonate, lithium bis(oxalato)borate, lithium difluoro(oxalato)borate, lithium bis(fluorosulfonyl)imide, or lithium bis(trifluoromethanesulfonyl)imide.

In any embodiment, the solvent includes one or more of monoglyme, diglyme, triglyme, tetraglyme, ethylene glycol diethyl ether, ethylene glycol ethyl methyl ether, or ethylene glycol dibutyl ether.

The appropriate solvent can improve the normal-temperature cycle performance and high-temperature cycle performance of the battery, reduce the high-temperature gassing phenomena of the battery, and improve the electrochemical performance and safety performance of the battery.

A second aspect of this application provides a sodium secondary battery. The sodium secondary battery includes the electrolyte disclosed in the first aspect.

In any embodiment, the sodium secondary battery includes a negative electrode plate. The electrolyte includes a lithium salt. The negative electrode plate includes a negative current collector and an undercoat formed on a surface of the negative current collector on at least one side. The electrolyte includes a lithium salt.

The sodium secondary battery satisfies: 0.84 ≤ Y - 0.01X ≤ 5.84.

In the relational expression above, X in units of g/m² is an areal density of the undercoat, and Y% is a mass percent of the lithium salt based on a total mass of the electrolyte.

By controlling the areal density X (g/m₂) of the undercoat on at least one side of the negative current collector and the mass percent Y% of the lithium salt in relation to the total mass of the electrolyte to satisfy the relation 0.84 ≤ Y - 0.01X ≤ 5.84, this application can improve the normal-temperature cycle performance and high-temperature cycle performance of the battery, and improve the electrochemical performance of the battery.

In any embodiment, an areal density of the undercoat is 5 to 50 g/m².

An appropriate areal density of the undercoat can improve the normal-temperature cycle performance and high-temperature cycle performance of the battery, and improve the electrochemical performance of the battery.

In any embodiment, the undercoat includes one or more of a carbon coating, an alloy coating, or a metal oxide coating, and optionally is a carbon coating.

In any embodiment, the undercoat includes one or more of superconductive carbon black, Ketjen black, acetylene black, carbon nanotubes, or graphene.

In any embodiment, the sodium secondary battery is an anode-free sodium metal battery.

The anode-free sodium metal battery can improve the normal-temperature cycle performance and high-temperature cycle performance of the battery, and improve the electrochemical performance of the battery.

A third aspect of this application provides a battery module. The battery module includes the sodium secondary battery disclosed in the second aspect of this application.

A fourth aspect of this application provides a battery pack. The battery pack includes the sodium secondary battery disclosed in the second aspect or the battery module disclosed in the third aspect.

A fifth aspect of this application provides an electrical device. The electrical device includes at least one of the sodium secondary battery disclosed in the second aspect, the battery module disclosed in the third aspect, or the battery pack disclosed in the fourth aspect of this application.

### BRIEF DESCRIPTION OF DRAWINGS

FIG. 1 is a schematic diagram of a sodium secondary battery according to an embodiment of this application;
FIG. 2 is an exploded view of the sodium secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electrical device that uses a sodium secondary battery as a power supply according to an embodiment of this application.

### List of reference numerals:

1. battery pack; 2. upper box; 3. lower box; 4. battery module; 5. sodium secondary battery; 51. housing; 52. electrode assembly; 53. cover plate.

### DETAILED DESCRIPTION OF EMBODIMENTS

The following describes and discloses in detail embodiments of a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

When a sodium secondary battery is used or stored at high temperature, a positive electrode and a negative electrode react with an electrolyte more actively, the side reactions of the battery increase drastically during cycling, and a large amount of gas is generated, thereby making the battery prone to expand in volume, and in severe cases, potentially causing a short circuit inside the battery, and severely deteriorating the electrochemical performance and safety performance of the battery.

### [Sodium secondary battery electrolyte]

This application provides a sodium secondary battery electrolyte. The electrolyte includes a solvent. A percentage of an amount of substance of a free solvent in relation to a total amount of substance of the solvent in the electrolyte is not greater than 50%.

As used herein, the term "sodium secondary battery" means a secondary battery that uses sodium ions as charge carriers. Negative active materials of the sodium secondary battery include a carbon-based material, a titanium-based material, an alloy material, a layered transition metal oxide, a layered transition metal selenide, an organic material, or metallic sodium. A sodium secondary battery that uses metallic sodium as a negative active material is referred to as a sodium metal battery.

In some embodiments, the negative active material of the sodium secondary battery includes one or more of a graphitic carbon material, an amorphous carbon material, or a carbon nano-material.

In some embodiments, the negative active material of the sodium secondary battery is hard carbon.

In some embodiments, the negative active material of the sodium secondary battery is metallic sodium.

As used herein, the term "anode-free sodium metal battery" means a sodium metal battery that uses a current collector as a negative electrode during assembling. Sodium ions are deposited onto the current collector to form the sodium metal negative electrode during the charging.

As used herein, the term "electrolyte" means a carrier of ions to be transmitted in a sodium secondary battery. The types of the electrolyte include liquid electrolyte, solid electrolyte, and quasi-solid electrolyte.

As used herein, the term "free solvent" means solvent molecules that are freely movable, not coordinated or complexed with sodium ions, and do not form hydrogen bonds or similar interactions between the solvent molecules. As an example, the free solvent does not participate in forming a solvation structure of the sodium ions.

The solvation structure means an aggregate formed by sodium ions and the solvent molecules that cluster around the sodium ions after a sodium salt dissolves in the solvent. This clustering occurs because the binding effect of the solvent molecules on cations in the electrolyte is much stronger than on anions.

In some embodiments, the amount of substance of the free solvent in the electrolyte is not greater than any one of 10%, 15%, 20%, 25%, 30%, 35%, 40%, 45%, or 50% of the total amount of substance of the solvent.

By controlling the percentage of the amount of substance of the free solvent in relation to the total amount of substance of the solvent in the electrolyte to be not greater than 50%, this application reduces the proportion of free solvent molecules in the electrolyte, reduces side reactions between the free solvent molecule and the positive or negative electrode, improves the cycle performance of the battery at high temperature, suppresses gassing of the sodium secondary battery cycled at high temperature, and improves the electrochemical performance and safety performance of the battery at high temperature.

In some embodiments, the electrolyte includes a sodium salt. The molar concentration of the sodium salt in the electrolyte is 2 to 7 mol/L. In some embodiments, the molar concentration of the sodium salt in the electrolyte may be any one of 2 to 3 mol/L, 2 to 3.5 mol/L, 2 to 4 mol/L, 2 to 4.5 mol/L, 2 to 5 mol/L, 2 to 5.5 mol/L, 2 to 6 mol/L, 2 to 6.5 mol/L, 2 to 7 mol/L, 3 to 3.5 mol/L, 3 to 4 mol/L, 3 to 4.5 mol/L, 3 to 5 mol/L, 3 to 5.5 mol/L, 3 to 6 mol/L, 3 to 6.5 mol/L, 3 to 7 mol/L, 3.5 to 4 mol/L, 3.5 to 4.5 mol/L, 3.5 to 5 mol/L, 3.5 to 5.5 mol/L, 3.5 to 6 mol/L, 3.5 to 6.5 mol/L, 3.5 to 7 mol/L, 4 to 4.5 mol/L, 4 to 5 mol/L, 4 to 5.5 mol/L, 4 to 6 mol/L, 4 to 6.5 mol/L, 4 to 7 mol/L, 4.5 to 5 mol/L, 4.5 to 5.5 mol/L, 4.5 to 6 mol/L, 4.5 to 6.5 mol/L, 4.5 to 7 mol/L, 5 to 5.5 mol/L, 5 to 6 mol/L, 5 to 6.5 mol/L, 5 to 7 mol/L, 5.5 to 6 mol/L, 5.5 to 6.5 mol/L, 5.5 to 7 mol/L, 6 to 6.5 mol/L, 6 to 7 mol/L, or 6.5 to 7 mol/L.

By controlling the molar concentration of the sodium salt to fall within the appropriate range, this application can increase the proportion of the solvent molecules coordinated with sodium ions in the electrolyte, reduce the proportion of free solvent molecules in the electrolyte, reduce side reactions between the free solvent molecule and the positive or negative electrode. In addition, the appropriate sodium salt concentration endows the electrolyte with an appropriate viscosity and an excellent ionic conductivity, so that the battery achieves excellent normal-temperature cycle performance and high-temperature cycle performance and just a small amount of gas generated at high temperature.

In some embodiments, the electrolyte includes a sodium salt. The molar concentration of the sodium salt in the electrolyte is 3 to 7 mol/L. In some embodiments, the molar concentration of the sodium salt in the electrolyte may be any one of 3 to 3.5 mol/L, 3 to 4 mol/L, 3 to 4.5 mol/L, 3 to 5 mol/L, 3 to 5.5 mol/L, 3 to 6 mol/L, 3 to 6.5 mol/L, 3 to 7 mol/L, 3.5 to 4 mol/L, 3.5 to 4.5 mol/L, 3.5 to 5 mol/L, 3.5 to 5.5 mol/L, 3.5 to 6 mol/L, 3.5 to 6.5 mol/L, 3.5 to 7 mol/L, 4 to 4.5 mol/L, 4 to 5 mol/L, 4 to 5.5 mol/L, 4 to 6 mol/L, 4 to 6.5 mol/L, 4 to 7 mol/L, 4.5 to 5 mol/L, 4.5 to 5.5 mol/L, 4.5 to 6 mol/L, 4.5 to 6.5 mol/L, 4.5 to 7 mol/L, 5 to 5.5 mol/L, 5 to 6 mol/L, 5 to 6.5 mol/L, 5 to 7 mol/L, 5.5 to 6 mol/L, 5.5 to 6.5 mol/L, 5.5 to 7 mol/L, 6 to 6.5 mol/L, 6 to 7 mol/L, or 6.5 to 7 mol/L.

By controlling the molar concentration of the sodium salt to fall within the appropriate range, this application can increase the proportion of the solvent molecules coordinated with sodium ions in the electrolyte, reduce the proportion of free solvent molecules in the electrolyte, and reduce side reactions between the free solvent molecule and the positive or negative electrode, thereby further reducing the high-temperature gassing phenomena of the battery. In addition, the appropriate sodium salt concentration endows the electrolyte with an appropriate viscosity and an excellent ionic conductivity, and is conducive to the electrochemical performance of the battery.

In some embodiments, the sodium salt includes a first sodium salt. The solubility of the first sodium salt in the solvent at room temperature is greater than 4 mol/L. In some embodiments, the sodium salt includes a first sodium salt. The solubility of the first sodium salt in the solvent at room temperature is greater than any one of 4 mol/L, 4.5 mol/L, 5 mol/L, 5.5 mol/L, 6 mol/L, 6.5 mol/L, or 7 mol/L.

As used herein, the term "room temperature" means 25 °C.

The first sodium salt of an excellent solubility ensures an appropriate molar concentration of the sodium salt in the electrolyte, makes the battery excellent in normal-temperature cycle performance and high-temperature cycle performance, and contributes to a low level of high-temperature gassing.

In some embodiments, the first sodium salt includes one or more of sodium bis(fluorosulfonyl)imide, sodium bis(trifluoromethanesulfonyl)imide, or sodium (fluorosulfonyl)(trifluoromethanesulfonyl)imide.

In some embodiments, the first sodium salt includes one or two of sodium bis(fluorosulfonyl)imide or sodium bis(trifluoromethanesulfonyl)imide.

The first sodium salt includes a sulfur-containing organic sodium salt that can easily participate in forming a structurally stable and uniformly distributed SEI film, thereby improving the high-temperature cycle performance of the battery and reducing the high-temperature gassing phenomena of the battery. In addition, the appropriate first sodium salt endows the electrolyte with an appropriate viscosity and an excellent ionic conductivity, makes the battery excellent in normal-temperature cycle performance and high-temperature cycle performance, and contributes to a low level of high-temperature gassing.

In some embodiments, the molar concentration of the first sodium salt in the electrolyte is not less than 0.01 mol/L. In some embodiments, the molar concentration of the first sodium salt in the electrolyte is not less than any one of 0.01 mol/L, 0.5 mol/L, 1 mol/L, 1.5 mol/L, 2 mol/L, 2.5 mol/L, 3 mol/L, 3.5 mol/L, 4 mol/L, 4.5 mol/L, 5 mol/L, 5.5 mol/L, 6 mol/L, 6.5 mol/L, or 7 mol/L.

The appropriate molar concentration of the first sodium salt in the electrolyte ensures that sufficient sodium salt participates in forming a solvation structure, and reduces the proportion of free solvent in the electrolyte. In addition, the appropriate molar concentration of the first sodium salt endows the electrolyte with an appropriate viscosity and an excellent ionic conductivity, makes the battery excellent in normal-temperature cycle performance and high-temperature cycle performance, and contributes to a low level of high-temperature gassing.

In some embodiments, the sodium salt includes a second sodium salt. A solubility of the second sodium salt in the solvent at room temperature is less than 3 mol/L. In some embodiments, the sodium salt includes a second sodium salt. The solubility of the second sodium salt in the solvent at room temperature is less than any one of 1 mol/L, 1.5 mol/L, 2 mol/L, 2.5 mol/L, or 3 mol/L.

In some embodiments, the second sodium salt includes one or more of sodium hexafluorophosphate, sodium tetrafluoroborate, sodium hexafluoroarsenate, sodium trifluoroacetate, sodium difluoro(oxalato)borate, sodium bis(oxalato)borate, or sodium trifluoromethanesulfonate.

The binding force between an anion and a sodium ion in the second sodium salt is relatively weak, thereby facilitating rapid deposition and stripping of sodium metal, and improving the kinetic performance of the battery. Especially in an anode-free sodium metal battery, the second sodium salt can effectively ensure the cycle performance of the battery. In addition, an appropriate second sodium salt endows the electrolyte with an appropriate viscosity and an excellent ionic conductivity, makes the battery excellent in normal-temperature cycle performance and high-temperature cycle performance, and contributes to a low level of high-temperature gassing.

In some embodiments, the molar concentration of the second sodium salt in the electrolyte is less than 2.7 mol/L. In some embodiments, the molar concentration of the second sodium salt in the electrolyte is less than any one of 2.7 mol/L, 2.6 mol/L, 2.5 mol/L, 2.4 mol/L, 2.3 mol/L, 2.2 mol/L, 2.1 mol/L, 2 mol/L, 1.9 mol/L, 1.8 mol/L, 1.7 mol/L, 1.6 mol/L, 1.5 mol/L, 1.4 mol/L, 1.3 mol/L, 1.2 mol/L, 1.1 mol/L, 1 mol/L, 0.9 mol/L, 0.8 mol/L, 0.7 mol/L, 0.6 mol/L, 0.5 mol/L, 0.4 mol/L, 0.3 mol/L, 0.2 mol/L, or 0.1 mol/L.

The appropriate molar concentration of the second sodium salt in the electrolyte makes the battery excellent in normal-temperature cycle performance and high-temperature cycle performance, and contributes to a low level of high-temperature gassing.

In some embodiments, the molar concentration of the second sodium salt in the electrolyte is 0.2 to 2.7 mol/L. In some embodiments, the molar concentration of the second sodium salt in the electrolyte may be any one of 0.2 to 0.5 mol/L, 0.2 to 1 mol/L, 0.2 to 1.5 mol/L, 0.2 to 2 mol/L, 0.2 to 2.5 mol/L, 0.2 to 2.7 mol/L, 0.5 to 1 mol/L, 0.5 to 1.5 mol/L, 0.5 to 2 mol/L, 0.5 to 2.5 mol/L, 0.5 to 2.7 mol/L, 1 to 1.5 mol/L, 1 to 2 mol/L, 1 to 2.5 mol/L, 1 to 2.7 mol/L, 1.5 to 2 mol/L, 1.5 to 2.5 mol/L, 1.5 to 2.7 mol/L, 2 to 2.5 mol/L, 2 to 2.7 mol/L, or 2.5 to 2.7 mol/L.

The appropriate molar concentration of the second sodium salt in the electrolyte can improve the normal-temperature cycle performance and high-temperature cycle performance of the battery, reduce the high-temperature gassing phenomena of the battery, and improve the electrochemical performance and safety performance of the battery.

In some embodiments, the electrolyte includes a lithium salt.

In some embodiments, the lithium salt includes one or more of lithium hexafluorophosphate, lithium tetrafluoroborate, lithium perchlorate, lithium hexafluoroarsenate, lithium trifluoroacetate, lithium tetraphenylborate, lithium trifluoromethanesulfonate, lithium bis(oxalato)borate, lithium difluoro(oxalato)borate, lithium bis(fluorosulfonyl)imide, or lithium bis(trifluoromethanesulfonyl)imide.

Using a sodium metal battery as an example, the introduced lithium ions can also effectively suppress the growth of sodium dendrites during sodium metal deposition. During charging of the sodium-metal battery, the negative electrode undergoes an electrochemical reaction in which the sodium ions are reduced to sodium metal by gaining electrons. At the beginning of the reaction, the sodium metal is unevenly deposited on the surface of the current collector to form dendrites. The tips of the dendrites possess a relatively high density of negative charges due to a tip effect. Both a lithium ion and a sodium ion are positive monovalent cations, and carry one unit of positive charge. However, the lithium ions are smaller in radius, and therefore, possess a higher density of positive charges, and are preferentially distributed at the tip of the dendrites in precedence over the sodium ions, thereby effectively reducing further deposition of the sodium ions at the tip of the sodium dendrites, suppressing the growth of the sodium dendrites, and in turn, greatly improving the cycle performance of the battery.

The lithium salt included in the electrolyte can improve the normal-temperature cycle performance and high-temperature cycle performance of the battery, reduce the high-temperature gassing phenomena of the battery, and improve the electrochemical performance and safety performance of the battery.

In some embodiments, the solvent includes one or more of monoglyme, diglyme, triglyme, tetraglyme, ethylene glycol diethyl ether, ethylene glycol ethyl methyl ether, or ethylene glycol dibutyl ether.

The molecules of the ether solvent can build a stable electrode/electrolyte interface on the surface of the negative electrode, form a stable SEI film, alleviate electrochemical polarization, improve the normal-temperature cycle performance and high-temperature cycle performance of the battery, reduce the high-temperature gassing phenomena of the battery, and improve the electrochemical performance and safety of the battery.

### [Sodium secondary battery]

This application provides a sodium secondary battery. The sodium secondary battery includes the electrolyte disclosed in any one of the embodiments above.

In some embodiments, the sodium secondary battery includes a negative electrode plate. The negative electrode plate includes a negative current collector and an undercoat formed on a surface of the negative current collector on at least one side. The electrolyte includes a lithium salt.

The sodium secondary battery satisfies: 0.84 ≤ Y - 0.01X ≤ 5.84.

In the relational expression above, X in units of g/m² is an areal density of the undercoat, and Y% is a mass percent of the lithium salt based on a total mass of the electrolyte.

In some embodiments, the sodium secondary battery includes a negative electrode plate. The negative electrode plate includes a negative current collector and an undercoat formed on at least one side of the negative current collector. The electrolyte includes a lithium salt. The sodium secondary battery satisfies any one of: 0.84 ≤ Y - 0.01X ≤ 5.84, 0.84 ≤ Y - 0.01X ≤ 1.84, 0.84 ≤ Y - 0.01X ≤ 2.84, 0.84 ≤ Y - 0.01X ≤ 3.84, 0.84 ≤ Y - 0.01X ≤ 4.84, 0.84 ≤ Y - 0.01X ≤ 5.84, 1.84 ≤ Y - 0.01X ≤ 2.84, 1.84 ≤ Y - 0.01X ≤ 3.84, 1.84 ≤ Y - 0.01X ≤ 4.84, 1.84 ≤ Y - 0.01X ≤ 5.84, 2.84 ≤ Y - 0.01X ≤ 3.84, 2.84 ≤ Y - 0.01X ≤ 4.84, 2.84 ≤ Y - 0.01X ≤ 5.84, 3.84 ≤ Y - 0.01X ≤ 4.84, 3.84 ≤ Y - 0.01X ≤ 5.84, 4.84 ≤ Y - 0.01X ≤ 5.84, 0.84 ≤ Y - 0.01X ≤ 1.5, 0.84 ≤ Y - 0.01X ≤ 2, 0.84 ≤ Y - 0.01X ≤ 2.5, 0.84 ≤ Y - 0.01X ≤ 3, 0.84 ≤ Y - 0.01X ≤ 3.5, 0.84 ≤ Y - 0.01X ≤ 4, 0.84 ≤ Y - 0.01X ≤ 4.5, 0.84 ≤ Y - 0.01X ≤ 5, 1.84 ≤ Y - 0.01X ≤ 5.5, 1.5 ≤ Y - 0.01X ≤ 2, 1.5 ≤ Y - 0.01X ≤ 2.5, 1.5 ≤ Y - 0.01X ≤ 3, 1.5 ≤ Y - 0.01X ≤ 3.5, 1.5 ≤ Y - 0.01X ≤ 4, 1.5 ≤ Y - 0.01X ≤ 4.5, 1.5 ≤ Y - 0.01X ≤ 5, 1.5 ≤ Y - 0.01X ≤ 5.5, 2 ≤ Y - 0.01X ≤ 2.5, 2 ≤ Y - 0.01X ≤ 3, 2 ≤ Y - 0.01X ≤ 3.5, 2 ≤ Y - 0.01X ≤ 4, 2 ≤ Y - 0.01X ≤ 4.5, 2 ≤ Y - 0.01X ≤ 5, 2 ≤ Y - 0.01X ≤ 5.5, 2.5 ≤ Y - 0.01X ≤ 3, 2.5 ≤ Y - 0.01X ≤ 3.5, 2.5 ≤ Y - 0.01X ≤ 4, 2.5 ≤ Y - 0.01X ≤ 4.5, 2.5 ≤ Y - 0.01X ≤ 5, 2.5 ≤ Y - 0.01X ≤ 5.5, 3 ≤ Y - 0.01X ≤ 3.5, 3 ≤ Y - 0.01X ≤ 4, 3 ≤ Y - 0.01X ≤ 4.5, 3 ≤ Y - 0.01X ≤ 5, 3 ≤ Y - 0.01X ≤ 5.5, 3.5 ≤ Y - 0.01X ≤ 4, 3.5 ≤ Y - 0.01X ≤ 4.5, 3.5 ≤ Y - 0.01X ≤ 5, 3.5 ≤ Y - 0.01X ≤ 5.5, 4 ≤ Y - 0.01X ≤ 4.5, 4 ≤ Y - 0.01X ≤ 5, 4 ≤ Y - 0.01X ≤ 5.5, 4.5 ≤ Y - 0.01X ≤ 5, 4.5 ≤ Y - 0.01X ≤ 5.5, or 5 ≤ Y - 0.01X ≤ 5.5.

In the relational expression above, X in units of g/m² is an areal density of the undercoat, and Y% is a mass percent of the lithium salt based on a total mass of the electrolyte.

As used herein, the term "undercoat on at least one side of the negative current collector" means that the one side or both sides of the current collector is coated with the undercoat. The undercoat may be in direct contact with the current collector, that is, with no other structure included between the current collector and the undercoat. Alternatively, the undercoat is not in direct contact with the current collector, with another structure included between the current collector and the undercoat.

The undercoat is characterized by a low metal nucleation potential, and can effectively improve the deposition/dissolution performance of the metal, and also alleviate the huge volume change caused by the deposition/dissolution of the metal to the battery cell, stabilize the structure of the battery cell, improve the normal-temperature cycle performance and high-temperature cycle performance of the battery, and improve the electrochemical performance of the battery.

The undercoat containing free electrons electrostatically adsorbs the lithium ions of a relatively high positive charge density. The lithium ions pass through the SEI layer and are deposited on the undercoat, thereby effectively reducing the overpotential required for sodium metal deposition, suppressing the formation of sodium dendrites, and improving the cycle performance of the battery.

The applicant hereof unexpectedly finds that, by controlling the areal density X (g/m²) of the undercoat on at least one side of the negative current collector and the mass percent Y% of the lithium salt in relation to the total mass of the electrolyte to satisfy the relation 0.84 ≤ Y - 0.01X ≤ 5.84, this application can improve the normal-temperature cycle performance and high-temperature cycle performance of the battery, and improve the electrochemical performance of the battery.

In some embodiments, the areal density of the undercoat is 5 to 50 g/m². In some embodiments, the areal density of the undercoat may be any one of 5 to 10 g/m², 5 to 20 g/m², 5 to 30 g/m², 5 to 40 g/m², 5 to 50 g/m², 10 to 20 g/m², 10 to 30 g/m², 10 to 40 g/m², 10 to 50 g/m², 20 to 30 g/m², 20 to 40 g/m², 20 to 50 g/m², 30 to 40 g/m², 30 to 50 g/m², or 40 to 50 g/m².

The areal density of the undercoat falling within an appropriate range can improve the normal-temperature cycle performance and high-temperature cycle performance of the battery. In addition, an appropriate areal density of the undercoat can increase the energy density of the battery and meet the use requirements of the battery.

In some embodiments, the undercoat includes one or more of a carbon coating, an alloy coating, or a metal oxide coating.

In some embodiments, the undercoat includes a carbon coating.

In some embodiments, the undercoat includes one or more of superconductive carbon black, Ketjen black, acetylene black, carbon nanotubes, or graphene.

In some embodiments, the undercoat includes a binder. The binder includes any one of polyvinylidene fluoride, sodium carboxymethylcellulose, styrene-butadiene rubber, sodium alginate, lithium/sodium polyacrylate, polytetrafluoroethylene, polyimide, or polyurethane.

In some embodiments, the undercoat is a metal coating. The metal assumes a body-centered cubic structure, in which the metal includes any one of α-Fe, V, Nb, Cr, Mo, Ta, or W.

In some embodiments, the undercoat is an alloy coating, in which the alloy may be an alloy formed from any one or more of the following metals: Au, Ag, Sn, or Sb.

In some embodiments, the undercoat is a metal oxide coating, in which the oxide includes at least one of copper oxide or aluminum oxide.

In some embodiments, the undercoat is a conductive polymer coating, in which the conductive polymer includes any one of polyaniline, polythiophene, polypyrrole, or polyphenylacetylene.

In some embodiments, the undercoat is a conductive ceramic coating, in which the conductive ceramic material includes at least one of TiB₂, TiC, or B₄C₃.

In some embodiments, the undercoat is a conductive carbon coating, in which the conductive carbon includes at least one of conductive carbon black, graphite, carbon fibers, single-walled carbon nanotubes, multi-walled carbon nanotubes, graphene, or fullerene. In any embodiment, the sodium secondary battery is an anode-free sodium metal battery.

In some embodiments, the sodium secondary battery is an anode-free sodium metal battery.

In some embodiments, the sodium secondary battery is an anode-free sodium metal battery. The anode-free sodium metal battery uses no negative active material, but uses a negative current collector as a negative electrode. Sodium ions are deposited on the negative electrode in an initial charging process, and then return to the positive electrode during discharge, thereby implementing a charge-and-discharge cycle. By employing a negative current collector but without a negative electrode material, the anode-free sodium metal battery can effectively overcome the defects of the sodium metal battery and achieve a higher energy density than a metallic sodium negative electrode.

The sodium secondary battery being an anode-free sodium metal battery can improve the normal-temperature cycle performance and high-temperature cycle performance of the battery, and improve the electrochemical performance of the battery.

In some embodiments, a cell balance CB value of the anode-free sodium metal battery is less than or equal to 0.1.

The CB value is a ratio of the capacity per unit area of the negative electrode plate to the capacity per unit area of the positive electrode plate in the sodium secondary battery. The anode-free sodium metal battery contains no negative active material. Therefore, the capacity per unit area of the negative electrode plate is relatively low, and the CB value of the secondary battery is less than or equal to 0.1.

In some embodiments, the negative current collector used in the negative electrode plate includes at least one of a metal foil current collector, a metal foam current collector, a metal mesh current collector, a carbon felt current collector, a carbon cloth current collector, or a carbon paper current collector. Sodium ions are not alloyable with aluminum. Considering cost-effectiveness and a light weight, the sodium secondary battery preferably adopts an aluminum-based current collector. The aluminum-based current collector is any one of an aluminum foil, an aluminum alloy foil, or an aluminum-based composite current collector. The aluminum-based composite current collector includes a polymer base film and an aluminum foil and/or an aluminum alloy foil formed on two sides of polymer base film. Specifically, the aluminum-based composite current collector is a "sandwich" structure. The polymer base film is located in the middle and flanked by aluminum foils or flanked by aluminum alloy foils; or, the polymer base film is coated with an aluminum foil on one side and with an aluminum alloy foil on the other side. The polymer base film is any one of polyamide, polyterephthalate, polyimide, polyethylene, polypropylene, polystyrene, polyvinyl chloride, poly(acrylonitrile-co-butadiene-co-styrene), polybutanediol terephthalate, poly-p-phenylene terephthamide, polyphenylene ether, polyoxymethylene, epoxy resin, phenol-formaldehyde resin, polytetrafluoroethylene, polyvinylidene difluoride, silicone rubber, or polycarbonate.

### [Positive electrode plate]

In some embodiments, the positive electrode plate includes a positive current collector and a positive active material layer formed on at least a part of surfaces of the positive current collector. The positive active material layer includes a positive active material. The positive active material may include at least one of a layered transition metal oxide, a polyanionic compound, or a Prussian blue compound.

The transition metal in the layered transition metal oxide may be at least one of Mn, Fe, Ni, Co, Cr, Cu, Ti, Zn, V, Zr, or Ce. Optionally, the layered transition metal oxide is, for example, NaₓMO₂, where M is one or more of Ti, V, Mn, Co, Ni, Fe, Cr, or Cu, and 0 < x ≤ 1.

The polyanionic compound may be a type of compound containing a metal ion, a transition metal ion, and a tetrahedral (YO₄)ⁿ⁻ anion unit. The metal ion is optionally one of a sodium ion, a lithium ion, a potassium ion, or a zinc ion. The transition metal is optionally at least one of Mn, Fe, Ni, Co, Cr, Cu, Ti, Zn, V, Zr, or Ce. Y is optionally at least one of P, S, or Si; and n denotes a valence of (YO₄)ⁿ.

The Prussian blue compound may be a compound containing a sodium ion, a transition metal ion, or a cyano ion (CN⁻). The transition metal may be at least one of Mn, Fe, Ni, Co, Cr, Cu, Ti, Zn, V, Zr, or Ce. For example, the Prussian blue compound is NaₐMe_{b}Me'_{c}(CN)₆, where Me and Me' each are independently at least one of Ni, Cu, Fe, Mn, Co, or Zn, 0 < a ≤ 2, 0 < b < 1, and 0 < c < 1.

The positive active material layer may further include a conductive agent to improve the conductivity of the positive electrode. The conductive agent is optionally one or more of Super P, acetylene black, carbon black, Ketjen black, carbon dots, carbon nanotubes, graphite, graphene, or carbon nanofibers.

The positive active material layer may include a binder to firmly bind the positive active material and optionally the conductive agent onto the positive current collector. The binder is optionally at least one of polyvinylidene difluoride (PVDF), polytetrafluoroethylene (PTFE), polyacrylic acid (PAA), polyvinyl alcohol (PVA), poly(ethylene-co-vinyl acetate) (EVA), styrene-butadiene rubber (SBR), carboxymethylcellulose (CMC), sodium alginate (SA), polymethacrylic acid (PMA), or carboxymethyl chitosan (CMCS).

The positive current collector may be a conductive carbon sheet, metal foil, carbon-coated metal foil, a porous metal sheet, or a composite current collector. The conductive carbon material of the conductive carbon sheet is optionally one or more of Super P, carbon black, Ketjen black, carbon dots, carbon nanotubes, graphite, graphene, or carbon nanofibers. The metal materials of the metal foil, the carbon-coated metal foil, and the porous metal sheet each are at least one independently selected from copper, aluminum, nickel, or stainless steel. The composite current collector may be a composite current collector formed by compounding metal foil and a polymer base film.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Separator]

In some embodiments, the sodium secondary battery further includes a separator. The type of the separator is not particularly limited in this application, and may be any well-known porous separator that is highly stable both chemically and mechanically.

In some embodiments, the material of the separator may be at least one selected from polyethylene, polypropylene, polyvinylidene fluoride, aramid fiber, polyethylene terephthalate, polytetrafluoroethylene, polyacrylonitrile, polyimide, polyamide, polyester, or natural fiber. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the sodium secondary battery may include an outer package. The outer package may be configured to package the electrode assembly and the electrolyte solution.

In some embodiments, the outer package of the sodium secondary battery may be a hard shell such as a hard plastic shell, an aluminum shell, a steel shell, or the like. Alternatively, the outer package of the sodium secondary battery may be a soft package such as a pouch-type soft package. The soft package may be made of plastic such as polypropylene, polybutylene terephthalate, or polybutylene succinate.

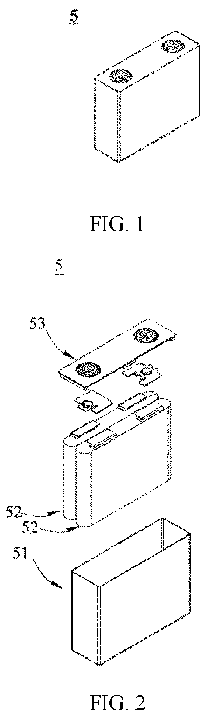

The shape of the sodium secondary battery is not particularly limited in this application, and may be cylindrical, prismatic or any other shape. For example, FIG. 1 shows a prismatic sodium secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. The housing 51 is provided with an opening that communicates to the accommodation cavity. The cover plate 53 can be placed over the opening to seal the accommodation cavity. The positive electrode plate, the negative electrode plate, and the separator may be made into the electrode assembly 52 by winding or stacking. The electrode assembly 52 is packaged in the accommodation cavity. The electrolyte infiltrates in the electrode assembly 52. The number of electrode assemblies 52 in a sodium secondary battery 5 may be one or more, and may be selected by a person skilled in the art as actually required.

In some embodiments, sodium secondary batteries may be assembled to form a battery module. The battery module may include one or more sodium secondary batteries, and the specific number of sodium secondary batteries in a battery module may be selected by a person skilled in the art depending on practical applications and capacity of the battery module.

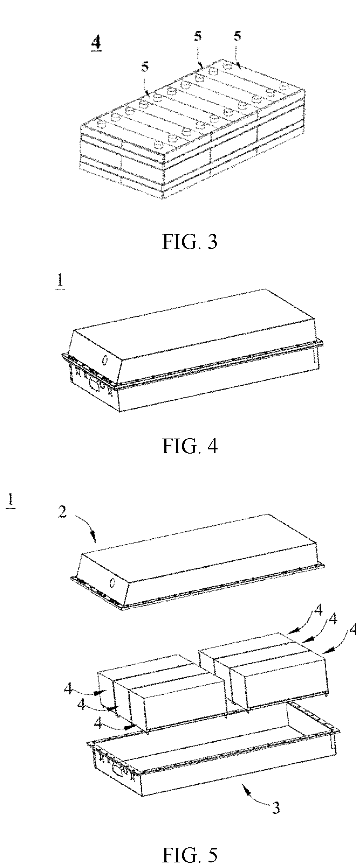

FIG. 3 shows a battery module 4 as an example. Referring to FIG. 3, in the battery module 4, a plurality of sodium secondary batteries 5 may be arranged sequentially along the length direction of the battery module 4. Alternatively, the secondary batteries may be arranged in any other manner. Further, the plurality of sodium secondary batteries 5 may be fixed by a fastener.

Optionally, the battery module 4 may further include a shell that provides an accommodation space. The plurality of sodium secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the sodium secondary battery, the battery module, or the battery pack according to this application. The sodium secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The sodium secondary battery, the battery module, or the battery pack may be selected for use in the electrical device according to practical requirements of the electrical device.

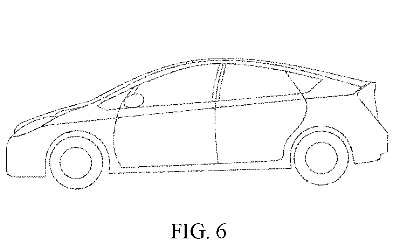

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the sodium secondary battery.

In another example, the device may be a mobile phone, a tablet computer, a notebook computer, or the like. The device is generally required to be thin and light, and may have a sodium secondary battery as a power supply.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market. In the following embodiments, an example is given in which the secondary battery is a sodium-ion battery, but this application is not limited to the example.

### I. Preparation methods

### Embodiment 1

### 1) Preparing an electrolyte

Dissolving sodium hexafluorophosphate (NaPF₆) as a second sodium salt into monoglyme (DME) in an argon atmosphere glovebox in which the water content is less than 10 ppm. Stirring well to obtain a mixed solution, and then dissolving lithium hexafluorophosphate (LiPF₆) as a lithium salt and sodium bis(fluorosulfonyl)imide (NaFSI) as a first sodium salt in the mixed solution to obtain an electrolyte. In the electrolyte, the molar concentration of the sodium bis(fluorosulfonyl)imide is 4 mol/L, and the molar concentration of the sodium hexafluorophosphate is 1 mol/L. Based on the total mass of the electrolyte, the mass percent of the lithium hexafluorophosphate is 2%.

### 2) Preparing a positive electrode plate

Mixing Na₃V₂(PO₄)₃ as a positive active material, polyvinylidene difluoride (PVDF) as a binder, and conductive carbon black (Super P) as a conductive agent at a mass ratio of 96%: 2%: 2% in an N-methyl-pyrrolidone (NMP) solvent, stirring well to obtain a positive electrode slurry. Applying, by using an extrusion coating machine, the positive electrode slurry onto the surface of an aluminum foil at a concentration that meets the requirement on the mass of the positive active material per unit area, and then oven-drying the slurry. Cold-pressing the coated electrode plate until a compaction density of 2.5 g/cm³ by using a cold-pressing machine, so as to obtain a finished positive electrode plate.

### 3) Preparing a negative electrode plate

Adding carbon nanotubes and sodium alginate into deionized water, and stirring the mixture to form a homogeneous slurry. Applying the slurry onto a negative current collector foil. Oven-drying the slurry, and cutting the foil to obtain a negative electrode plate without a negative electrode structure, where the areal density of the undercoat is 20 g/m².

### 4) Separator

Using a polyethylene (PE) film as a separator.

### 5) Preparing a battery

Stacking the positive electrode plate, the separator, and the negative electrode plate sequentially in such a way that the separator is located between the positive electrode plate and the negative electrode plate to a serve a separation function. Injecting the electrolyte prepared above, and assembling the stacked structure to form a coin cell.

### Embodiments 2 to 31

Embodiments 2 to 31 are identical to Embodiment 1 except the electrolyte formula and/or the negative electrode plate preparation parameters. The preparation method of the negative electrode plates in Embodiments 29 and 30 is described below. The specific parameters are shown in Table 1 and Table 2.

Embodiment 29: Adding carbon nanotubes and sodium alginate into deionized water, stirring well to form a homogeneous slurry, applying the slurry onto a negative current collector aluminum foil, oven-drying the slurry, cutting the foil to obtain a negative current collector with an undercoat, where the areal density of the undercoat is 20 g/m²; mixing well hard carbon as a negative active material, acetylene black as a conductive agent, styrene-butadiene rubber (SBCs) as a binder, and carboxymethyl cellulose (CMC) as a thickener at a mass ratio of 90: 5: 4: 1 in an appropriate amount of deionized water to form a homogeneous negative electrode slurry; applying the negative electrode slurry onto a negative current collector foil with an undercoat, drying the slurry at 100 °C, and pressing the foil to obtain a negative electrode plate.

Embodiment 30: The negative electrode plate is aluminum foil.

### Comparative Embodiments 1 to 7

Comparative Embodiments 1 to 7 are identical to Embodiment 1 except the electrolyte formula and/or the negative electrode plate preparation parameters. The preparation method of the negative electrode plate in Comparative Embodiment 6 is identical to that in Embodiment 29, and the preparation method of the negative electrode plate in Comparative Embodiment 7 is identical to that in Embodiment 30. The specific parameters are shown in Table 1 and Table 2.

### II. Battery performance test

### 1) Mass percent of the free solvent

Analyzing an infrared spectrum of the electrolyte by using a Nicolet iS5 Fourier transform infrared spectrometer, and normalizing the spectrogram, and then recording the intensity of the characteristic peak of the solvent as I₁. measuring the infrared spectrum of the electrolyte by using the solvent of the gel electrolyte composition as a reference pattern, normalizing the spectrogram, and then recording the intensity of the corresponding characteristic peak of the solvent as I₂, so that the I₁/I₂ ratio is the percentage of the amount of substance of the free solvent to the amount of substance of the free solvent in the electrolyte. The characteristic peak of the solvent is selected depending on the type of the solvent. For an ether solvent, the characteristic peak of the C-O bond lies in the region of 800 to 900 cm⁻¹; for an ester solvent, the characteristic peak of the C=O bond lies in the region of 850 to 950 cm⁻¹ and the region of 1700 to 1800 cm⁻¹, where the characteristic peak exhibited in the region of 850 to 950 cm⁻¹ applies in comparing the peak intensity.

### 2) Normal-temperature cycle performance

Charging a battery at a constant current of 0.5C in a 25 °C and normal-pressure (0.1 MPa) environment until the voltage reaches 3.5 V, and then discharging the battery at a constant current of 1C until the voltage drops to 3.2 V, thereby completing one charge-discharge cycle. Repeating the above charging and discharging process for 500 cycles, and recording the cycle capacity retention rate by assuming that the first-cycle discharge capacity is 100%. Using the normal-temperature capacity retention rate as a metric of the normal-temperature cycle performance of the battery.

### 3) High-temperature cycle performance

Charging a battery at a constant current of 0.5C in a 60 °C and normal-pressure (0.1 MPa) environment until the voltage reaches 3.5 V, and then discharging the battery at a constant current of 1C until the voltage drops to 3.2 V, thereby completing one charge-discharge cycle. Repeating the above charging and discharging process for 500 cycles, and recording the cycle capacity retention rate by assuming that the first-cycle discharge capacity is 100%. Using the normal-temperature capacity retention rate as an indicator of the normal-temperature cycle performance of the battery.

### 4) High-temperature anti-gassing capability

Charging a battery at a constant current of 0.5C at a room temperature (25 °C) until the voltage reaches 3.5 V. Measuring the initial volume of the fully-charged battery by a drainage method. Storing the battery in a 60 °C oven for 24 days, and then taking out the battery. Leaving the battery to stand for 60 minutes at a room temperature. Measuring the volume of the battery by a drainage method within a period of 60 minutes after the battery is cooled down to a room temperature. Calculating the volume expansion rate of the battery against the battery volume measured before storage. Calculating the volume expansion rate of the battery that has been stored at 60 °C for 24 days as: volume expansion rate (%) = (volume of the battery measured after storage/volume of the battery measured before storage) - 1.

The test process for the comparative embodiment and other embodiments is the same as above.

### III. Test results

The test results of the embodiments and comparative embodiments are shown in Table 1 and Table 2.

**Table 1 Preparation parameters of embodiments and comparative embodiments (To be continued)**

| Serial number | First sodium salt | | Second sodium salt | | Lithium salt | | Solvent |
|---|---|---|---|---|---|---|---|
| | Name | Molar concentration (mol/L) | Name | Molar concentration (mol/L) | Name | Y | Name |
| Embodiment 1 | NaFSI | 4 | NaPF₆ | 1 | LiPF₆ | 2 | Monoglyme |
| Embodiment 2 | NaFSI | 1 | NaPF₆ | 1 | LiPF₆ | 2 | Monoglyme |
| Embodiment 3 | NaFSI | 2 | NaPF₆ | 1 | LiPF₆ | 2 | Monoglyme |
| Embodiment 4 | NaFSI | 5 | NaPF₆ | 1 | LiPF₆ | 2 | Monoglyme |
| Embodiment 5 | NaFSI | 6 | NaPF₆ | 1 | LiPF₆ | 2 | Monoglyme |
| Embodiment 6 | NaFSI | 0.01 | NaPF₆ | 2.3 | LiPF₆ | 2 | Monoglyme |
| Embodiment 7 | NaFSI | 4 | / | / | LiPF₆ | 2 | Monoglyme |
| Embodiment 8 | NaFSI | 4 | / | / | / | / | Monoglyme |
| Embodiment 9 | NaTFSI | 4 | NaPF₆ | 1 | LiPF₆ | 2 | Monoglyme |
| Embodiment 10 | NaFSI | 4 | NaBF₄ | 1 | LiPF₆ | 2 | Monoglyme |
| Embodiment 11 | NaFSI | 4 | CF₃COONa | 1 | LiPF₆ | 2 | Monoglyme |
| Embodiment 12 | NaFSI | 4 | NaPF₆ | 2.7 | LiPF₆ | 2 | Monoglyme |
| Embodiment 13 | NaFSI | 4 | NaPF₆ | 0.1 | LiPF₆ | 2 | Monoglyme |
| Embodiment 14 | NaFSI | 4 | NaPF₆ | 2 | LiPF₆ | 2 | Monoglyme |
| Embodiment 15 | NaFSI | 4 | NaPF₆ | 1 | LiPF₆ | 2 | Diglyme |
| Embodiment 16 | NaFSI | 4 | NaPF₆ | 1 | LiPF₆ | 2 | Ethylene glycol ethyl methyl ether |
| Embodiment 17 | NaFSI | 4 | NaPF₆ | 1 | LiPF₆ | 2 | Dimethyl carbonate |
| Embodiment 18 | NaFSI | 4 | NaPF₆ | 1 | / | / | Monoglyme |
| Embodiment 19 | NaFSI | 4 | NaPF₆ | 1 | LiODFB | 2 | Monoglyme |

**Table 1 Preparation parameters of embodiments and comparative embodiments (Continued)**

| Serial number | First sodium salt | | Second sodium salt | | Lithium salt | | Solvent |
|---|---|---|---|---|---|---|---|
| | Name | Molar concentration (mol/L) | Name | Molar concentration (mol/L) | Name | Y | Name |
| Embodiment 20 | NaFSI | 4 | NaPF₆ | 1 | LiFSI | 2 | Monoglyme |
| Embodiment 21 | NaFSI | 4 | NaPF₆ | 1 | LiPF₆ | 1.04 | Monoglyme |
| Embodiment 22 | NaFSI | 4 | NaPF₆ | 1 | LiPF₆ | 6.04 | Monoglyme |
| Embodiment 23 | NaFSI | 4 | NaPF₆ | 1 | LiPF₆ | 0.7 | Monoglyme |
| Embodiment 24 | NaFSI | 4 | NaPF₆ | 1 | LiPF₆ | 6.7 | Monoglyme |
| Embodiment 25 | NaFSI | 4 | NaPF₆ | 1 | LiPF₆ | 2.85 | Monoglyme |
| Embodiment 26 | NaFSI | 4 | NaPF₆ | 1 | LiPF₆ | 3.3 | Monoglyme |
| Embodiment 27 | NaFSI | 4 | NaPF₆ | 1 | LiPF₆ | 2.82 | Monoglyme |
| Embodiment 28 | NaFSI | 4 | NaPF₆ | 1 | LiPF₆ | 3.4 | Monoglyme |
| Embodiment 29 | NaFSI | 4 | NaPF₆ | 1 | LiPF₆ | 2 | Monoglyme |
| Embodiment 30 | NaFSI | 4 | NaPF₆ | 1 | LiPF₆ | 2 | Monoglyme |
| Embodiment 31 | NaFSI | 5 | / | / | LiPF₆ | 2 | Monoglyme |
| Comparative Embodiment 1 | NaFSI | 0.5 | NaPF₆ | 0.5 | LiPF₆ | 2 | Monoglyme |
| Comparative Embodiment 2 | NaFSI | 1 | / | / | LiPF₆ | 2 | Monoglyme |
| Comparative Embodiment 3 | NaFSI | 0.5 | NaPF₆ | 0.5 | / | / | Monoglyme |
| Comparative Embodiment 4 | NaFSI | 1 | / | / | / | / | Monoglyme |
| Comparative Embodiment 5 | NaFSI | 0.5 | NaPF₆ | 0.5 | LiPF₆ | 2 | Dimethyl carbonate |
| Comparative Embodiment 6 | NaFSI | 0.5 | NaPF₆ | 0.5 | LiPF₆ | 2 | Monoglyme |
| Comparative Embodiment 7 | NaFSI | 0.5 | NaPF₆ | 0.5 | LiPF₆ | 2 | Monoglyme |

**Table 2 Preparation parameters and test results of embodiments and comparative embodiments (To be continued)**

| Serial number | Carbon coating areal density X (g/m²) | Y-0.01X | Percentage of free solvent in total solvent amount | Battery performance | | |
|---|---|---|---|---|---|---|
| | | | | Normal-temperature cycle capacity retention rate | High-temperature cycle capacity retention rate | High-temperature thickness expansion rate |
| Embodiment 1 | 20 | 2.8 | 16% | 88.36% | 81.06% | 0.25% |
| Embodiment 2 | 20 | 2.8 | 47% | 65.74% | 60.41% | 2.74% |
| Embodiment 3 | 20 | 2.8 | 35% | 80.39% | 75.49% | 2.02% |
| Embodiment 4 | 20 | 2.8 | 12% | 81.24% | 76.21% | 0.26% |
| Embodiment 5 | 20 | 2.8 | 9% | 72.33% | 68.32% | 0.25% |
| Embodiment 6 | 20 | 2.8 | 45% | 90.21% | 76.29% | 2.68% |
| Embodiment 7 | 20 | 2.8 | 24% | 78.63% | 70.96% | 1.06% |
| Embodiment 8 | 20 | / | 25% | 76.39% | 70.16% | 1.12% |
| Embodiment 9 | 20 | 2.8 | 16% | 84.21% | 76.66% | 0.31% |
| Embodiment 10 | 20 | 2.8 | 16% | 87.69% | 79.12% | 0.28% |
| Embodiment 11 | 20 | 2.8 | 16% | 85.43% | 78.43% | 0.28% |
| Embodiment 12 | 20 | 2.8 | 11% | 80.25% | 73.35% | 0.26% |
| Embodiment 13 | 20 | 2.8 | 23% | 79.63% | 71.69% | 0.98% |
| Embodiment 14 | 20 | 2.8 | 14% | 87.34% | 79.12% | 0.26% |
| Embodiment 15 | 20 | 2.8 | 18% | 87.69% | 79.34% | 0.46% |
| Embodiment 16 | 20 | 2.8 | 15% | 87.92% | 80.46% | 0.24% |
| Embodiment 17 | 20 | 2.8 | 16% | 44.33% | 0% | 2.98% |
| Embodiment 18 | 20 | / | 16% | 70.31% | 62.15% | 0.26% |
| Embodiment 19 | 20 | 2.8 | 16% | 86.34% | 79.12% | 0.25% |

**Table 2 Preparation parameters and test results of embodiments and comparative embodiments (Continued)**

| Serial number | Carbon coating areal density X (g/m²) | Y-0.01X | Percentage of free solvent in total solvent amount | Battery performance | | |
|---|---|---|---|---|---|---|
| | | | | Normal-temperature cycle capacity retention rate | High-temperature cycle capacity retention rate | High-temperature thickness expansion rate |
| Embodiment 20 | 20 | 2.8 | 16% | 85.21% | 78.69% | 0.25% |
| Embodiment 21 | 20 | 0.84 | 16% | 82.01% | 77.32% | 0.27% |
| Embodiment 22 | 20 | 5.84 | 15% | 81.26% | 74.26% | 0.25% |
| Embodiment 23 | 20 | 0.5 | 16% | 76.33% | 70.15% | 0.25% |
| Embodiment 24 | 20 | 6.5 | 15% | 78.46% | 69.33% | 0.26% |
| Embodiment 25 | 5 | 2.8 | 16% | 80.60% | 73.69% | 0.28% |
| Embodiment 26 | 50 | 2.8 | 16% | 81.59% | 74.01% | 0.25% |
| Embodiment 27 | 2 | 2.8 | 16% | 76.21% | 70.32% | 0.25% |
| Embodiment 28 | 60 | 2.8 | 16% | 77.36% | 69.88% | 0.25% |
| Embodiment 29 | 20 + negative active layer of hard carbon | 2.8 | 16% | 83.26% | 76.29% | 0.25% |
| Embodiment 30 | / | / | 16% | 76.31% | 69.84% | 0.25% |
| Embodiment 31 | 20 | 2.8 | 16% | 78.68% | 71.36% | 0.74% |
| Comparative Embodiment 1 | 20 | 2.8 | 66% | 75.44% | 58.22% | 3.02% |
| Comparative Embodiment 2 | 20 | 2.8 | 66% | 70.96% | 54.36% | 3.16% |
| Comparative Embodiment 3 | 20 | / | 68% | 72.16% | 55.06% | 3.08% |
| Comparative Embodiment 4 | 20 | / | 68% | 69.31% | 50.75% | 3.26% |
| Comparative Embodiment 5 | 20 | 2.8 | 66% | 36.69% | 0% | 3.11% |
| Comparative Embodiment 6 | 20 + negative active layer of hard carbon | 2.8 | 66% | 72.61% | 55.69% | 3.15% |
| Comparative Embodiment 7 | / | / | 66% | 70.56% | 53.21% | 3.65% |

As can be seen from the above results, the percentage of the amount of substance of the free solvent in relation to the total amount of substance of the solvent in the sodium secondary battery electrolyte in Embodiments 1 to 31 is not greater than 50%. As can be seen from comparison of Embodiments 1 to 16 and 18 to 31, Comparative Embodiments 1 to 4 and 6 to 7, and Embodiment 17 and Comparative Embodiment 5, the percentage of the amount of substance of the free solvent in relation to the total amount of substance of the solvent in the electrolyte is not greater than 50%, thereby improving the high-temperature capacity retention rate and high-temperature cycle performance of the battery, reducing the high-temperature expansion rate of the battery, reducing the high-temperature gassing amount of the battery, and improving the electrochemical performance and safety performance of the battery at high temperature.

As can be seen from Embodiments 1 to 31, the electrolyte includes a sodium salt. The molar concentration of the sodium salt in the electrolyte is 2 to 7 mol/L, so that the battery is excellent in normal-temperature cycle performance and high-temperature cycle performance and generates gas in a low degree at high temperature.

As can be seen from Embodiments 1, 3 to 5, 7 to 14, and 31 versus Embodiments 2 and 6, the molar concentration of the sodium salt in the electrolyte is 3 to 7 mol/L, thereby further reducing the gassing phenomena of the battery and improving the safety performance of the battery at high temperature.

The electrolytes in Embodiments 1 to 31 each contain a first sodium salt. The first sodium salt contains sodium bis(fluorosulfonyl)imide (NaFSI) or sodium bis(trifluoromethanesulfonyl)imide (NaTFSI), and the molar concentration of the first sodium salt is not less than 0.01 mol/L, so that the battery is excellent in normal-temperature cycle performance and high-temperature cycle performance and incurs just a low degree of high-temperature gassing.

As can be seen from Embodiment 1 versus Embodiment 31, the second sodium salt additionally included in the electrolyte can improve the normal-temperature cycle performance and high-temperature cycle performance of the battery, reduce the high-temperature gassing phenomena of the battery, and improve the electrochemical performance and safety performance of the battery.

As can be seen from Embodiments 1 to 6 and 9 to 30, the electrolyte includes a second sodium salt. The second sodium salt includes sodium hexafluorophosphate (NaPF₆), sodium tetrafluoroborate (NaBF₄), or sodium trifluoroacetate (CF₃COONa), and the molar concentration of the second sodium salt in the electrolyte is less than 2.7 mol/L, so that the battery is excellent in normal-temperature cycle performance and high-temperature cycle performance and generates gas in a low degree at high temperature.

As can be seen from Embodiments 1, 12, and 14 versus Embodiment 13, the molar concentration of the second sodium salt is 0.2 to 2.7 mol/L, thereby improving the normal-temperature cycle performance and high-temperature cycle performance of the battery, reducing the high-temperature gassing phenomena of the battery, and improving the electrochemical performance and safety performance of the battery.

As can be seen from Embodiments 7 and 8 versus Embodiments 1 and 19 to 20 versus Embodiment 18, the electrolyte includes a lithium salt, and the lithium salt includes sodium hexafluorophosphate (LiPF₆), lithium difluoro(oxalato)borate (LiODFB), or lithium bis(fluorosulfonyl)imide (LiFSI), thereby improving the normal-temperature cycle performance and high-temperature cycle performance of the battery, reducing the high-temperature gassing phenomena of the battery, and improving the electrochemical performance and safety performance of the battery.

As can be seen from Embodiments 1 and 15 to 16 versus Embodiment 17, the solvent includes monoglyme, diglyme, or ethylene glycol ethyl methyl ether, thereby improving the normal-temperature cycle performance and high-temperature cycle performance of the battery, reducing the high-temperature gassing phenomena of the battery, and improving the electrochemical performance and safety performance of the battery.

As can be seen from Embodiments 1 and 29 versus Embodiment 30, an undercoat is disposed on at least one side of the negative current collector, and the undercoat includes a carbon coating, thereby improving the normal-temperature cycle performance and high-temperature cycle performance of the battery, and improving the electrochemical performance of the battery.

As can be seen from Embodiments 1 and 21 to 22 versus Embodiments 23 to 24, by controlling the areal density X (g/m₂) of the undercoat on at least one side of the negative current collector and the mass percent Y% of the lithium salt in relation to the total mass of the electrolyte to satisfy the relation 0.84 ≤ Y - 0.01X ≤ 5.84, this application can improve the normal-temperature cycle performance and high-temperature cycle performance of the battery, and improve the electrochemical performance of the battery.

As can be seen from Embodiments 1 and 25 to 26 versus Embodiments 27 to 28, the areal density of the undercoat is 5 to 50 g/m², thereby improving the normal-temperature cycle performance and high-temperature cycle performance of the battery, and improving the electrochemical performance of the battery.

As can be seen from Embodiment 1 versus Embodiment 29, the sodium secondary battery is an anode-free sodium metal battery, thereby improving the normal-temperature cycle performance and high-temperature cycle performance of the battery, and improving the electrochemical performance of the battery.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A sodium secondary battery electrolyte, **characterized in that** the electrolyte comprises a solvent, and a percentage of an amount of substance of a free solvent in relation to a total amount of substance of the solvent in the electrolyte is not greater than 50%.

2. The electrolyte according to claim 1, **characterized in that** the electrolyte comprises a sodium salt, and a molar concentration of the sodium salt in the electrolyte is 2 to 7 mol/L, and optionally 3 to 7 mol/L.

3. The electrolyte according to claim 2, **characterized in that** the sodium salt comprises a first sodium salt, and a solubility of the first sodium salt in the solvent at room temperature is greater than 4 mol/L.

4. The electrolyte according to claim 3, **characterized in that** the first sodium salt comprises one or more of sodium bis(fluorosulfonyl)imide, sodium bis(trifluoromethanesulfonyl)imide, or sodium (fluorosulfonyl)(trifluoromethanesulfonyl)imide, and optionally one or two of sodium bis(fluorosulfonyl)imide or sodium bis(trifluoromethanesulfonyl)imide.

5. The electrolyte according to claim 3 or 4, **characterized in that** a molar concentration of the first sodium salt in the electrolyte is not less than 0.01 mol/L.

6. The electrolyte according to any one of claims 2 to 5, **characterized in that** the sodium salt comprises a second sodium salt, and a solubility of the second sodium salt in the solvent at room temperature is less than 3 mol/L.

7. The electrolyte according to claim 6, **characterized in that** the second sodium salt comprises one or more of sodium hexafluorophosphate, sodium tetrafluoroborate, sodium hexafluoroarsenate, sodium trifluoroacetate, sodium difluoro(oxalato)borate, sodium bis(oxalato)borate, or sodium trifluoromethanesulfonate.

8. The electrolyte according to claim 6 or 7, **characterized in that** a molar concentration of the second sodium salt in the electrolyte is less than 2.7 mol/L, and optionally is 0.2 to 2.7 mol/L.

9. The electrolyte according to any one of claims 1 to 8, **characterized in that** the electrolyte comprises a lithium salt.

10. The electrolyte according to claim 9, **characterized in that** the lithium salt comprises one or more of lithium hexafluorophosphate, lithium tetrafluoroborate, lithium perchlorate, lithium hexafluoroarsenate, lithium trifluoroacetate, lithium tetraphenylborate, lithium trifluoromethanesulfonate, lithium bis(oxalato)borate, lithium difluoro(oxalato)borate, lithium bis(fluorosulfonyl)imide, or lithium bis(trifluoromethanesulfonyl)imide.

11. The electrolyte according to any one of claims 1 to 10, **characterized in that** the solvent comprises one or more of monoglyme, diglyme, triglyme, tetraglyme, ethylene glycol diethyl ether, ethylene glycol ethyl methyl ether, or ethylene glycol dibutyl ether.

12. A sodium secondary battery, **characterized in that** the sodium secondary battery comprises the electrolyte according to any one of claims 1 to 11.

13. The sodium secondary battery according to claim 12, **characterized in that** the sodium secondary battery comprises a negative electrode plate, the negative electrode plate comprises a negative current collector and an undercoat formed on at least one side of the negative current collector, and the electrolyte comprises a lithium salt;
the sodium secondary battery satisfies: 0.84 ≤ Y - 0.01X ≤ 5.84, wherein
X in units of g/m² is an areal density of the undercoat, and Y% is a mass percent of the lithium salt based on a total mass of the electrolyte.

14. The sodium secondary battery according to claim 13, **characterized in that** the areal density of the undercoat is 5 to 50 g/m².

15. The sodium secondary battery according to claim 13 or 14, **characterized in that** the undercoat comprises one or more of a carbon coating, an alloy coating, or a metal oxide coating, and optionally is a carbon coating.

16. The sodium secondary battery according to any one of claims 13 to 15, **characterized in that** the undercoat comprises one or more of superconductive carbon black, Ketjen black, acetylene black, carbon nanotubes, or graphene.

17. The secondary battery according to any one of claims 12 to 16, **characterized in that** the sodium secondary battery is an anode-free sodium metal battery.

18. An electrical device, **characterized in that** the electrical device comprises the sodium secondary battery according to any one of claims 12 to 17.
